# EUROPEAN PATENT SPECIFICATION

(11) **EP 2 192 967 B1**
(45) Date of publication and mention of the grant of the patent: **13.01.2016**
(21) Application number: 08803644.7
(22) Date of filing: 04.09.2008
(51) Int. Cl.: B01D 33/073, B01D 33/50

(54) **SELF-CLEANING FILTRATION MACHINE WITH ROTARY DRUM FILTER FOR CONTAMINATED LIQUIDS**
SELBSTREINIGUNGSFILTRATIONSMASCHINE MIT DREHTROMMELFILTER FÜR VERUNREINIGTE FLÜSSIGKEITEN
EQUIPEMENT DE FILTRATION AUTONETTOYANT ÉQUIPÉ D'UN FILTRE À TAMBOUR ROTATIF POUR LIQUIDES POLLUÉS

(30) Priority: 17.09.2007 IT MI20071789
(43) Date of publication of application: 09.06.2010
(73) Proprietor: Losma S.p.a., 24035 Curno (IT)
(72) Inventor: POLA, Carlo, I-10074 Lanzo Torinese (IT)
(74) Representative: Modiano, Micaela Nadia
(86) International application number: PCT/EP2008/061674
(87) International publication number: WO 2009/037122

(56) References cited:
- EP-A- 0 463 538
- EP-A- 0 566 908
- EP-A- 0 943 366
- GB-A- 1 443 432
- GB-A- 2 302 818
- US-A- 4 261 822
- US-A- 5 356 532
- US-B1- 6 336 561

## Description

### Technical Field

The present invention relates to a self-cleaning filtration machine with rotary drum filter for filtering contaminated liquids.

### Background Art

Known filtration machines for filtering contaminated liquids comprise substantially a filtration device which is interposed between a tank for collecting the contaminated liquid and a tank for collecting the filtered liquid.

The flow of fluid that is established between the two tanks can occur by way of natural phenomena, for example by gravity, or by way of external means, which force the liquid to pass in the filtration device.

This passage often occurs thanks to the use of a pump which draws the filtered liquid from the filtered liquid collection tank, thus creating a negative difference between the two tanks and consequently forcing the passage of the contaminated liquid from the contaminated liquid collection tank to the filtered liquid collection tank through the filtration device.

Using pumps to create the partial vacuum described above is an expensive choice.

The insertion of a pump in a hydraulic system, such as for example the system for cleaning contaminated fluid, in fact entails a substantial expense, linked not only to the purchase of the pump but also linked to the technical measures related to the installation of such pump.

These measures are essential in order to reproduce the optimum operating conditions for the selected pump and prevent phenomena that damage such pump, such as for example cavitation.

Another drawback consists in that known machines are structurally very complicated and therefore are scarcely flexible in terms of possible variations in configuration after installation.

Another drawback of known machines, linked to their structural complexity, consists in that maintenance operations are very complicated and entail high maintenance costs.

EP 0 463 538, US 6,336,561 and EP 0 943 366 disclose filtration machines with rotary drums GB 1 443 432 discloses a rotary drum filter with the features set forth in the preamble of claim 1.

The aim of the present invention is to eliminate the drawbacks cited above by providing a self-cleaning filtration machine with rotary drum filter for contaminated liquids that uses technical solutions that do not require the use of pumps, thus reducing costs.

Within this aim, an object of the present invention is to provide a self-cleaning filtration machine with rotary drum filter for contaminated liquids, manufactured in such a manner to have from the outset the possibility to be fitted and subsequently modified in order to adapt it to installation and system requirements.

Another object of the present invention is to provide a self-cleaning filtration machine with rotary drum filter for contaminated liquids that allows simple and quick extraction of the components in order to perform maintenance operations.

This aim and these and other objects, which wih become better apparent hereinafter, are achieved by a self-cleaning filtration machine as defined in claim 1.

Further characteristics and advantages of the present invention will become better apparent from the description of a preferred but not exclusive embodiment of a self-cleaning filtration machine with rotary drum filter for filtering contaminated liquids according to the invention, illustrated by way of non-limiting example in the accompanying drawings, wherein:

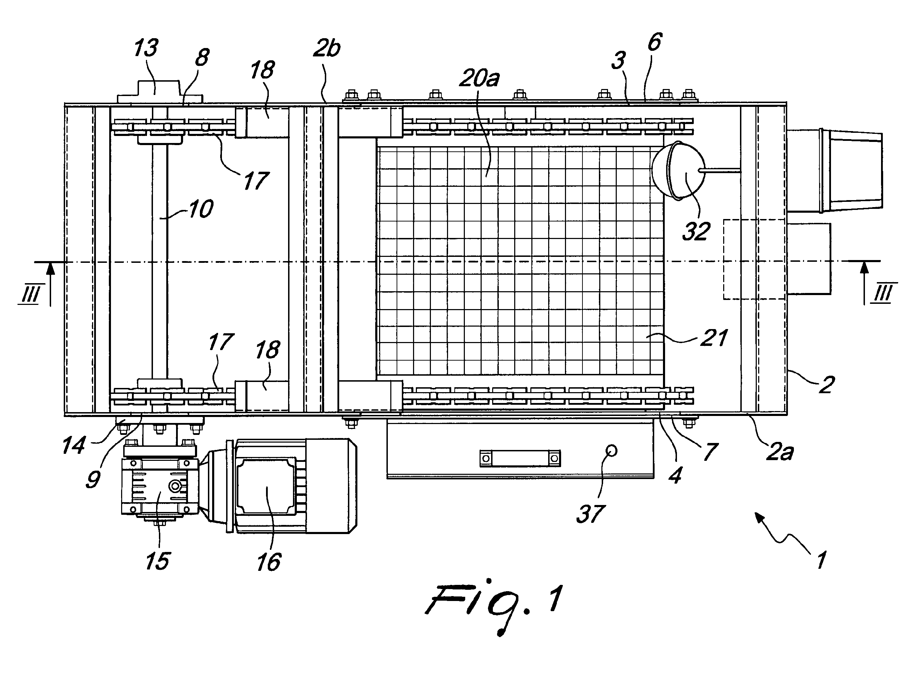

Figure 1 is a top view of an embodiment of a self-cleaning filtration machine with rotary drum filter for filtering contaminated liquids according to the present invention;

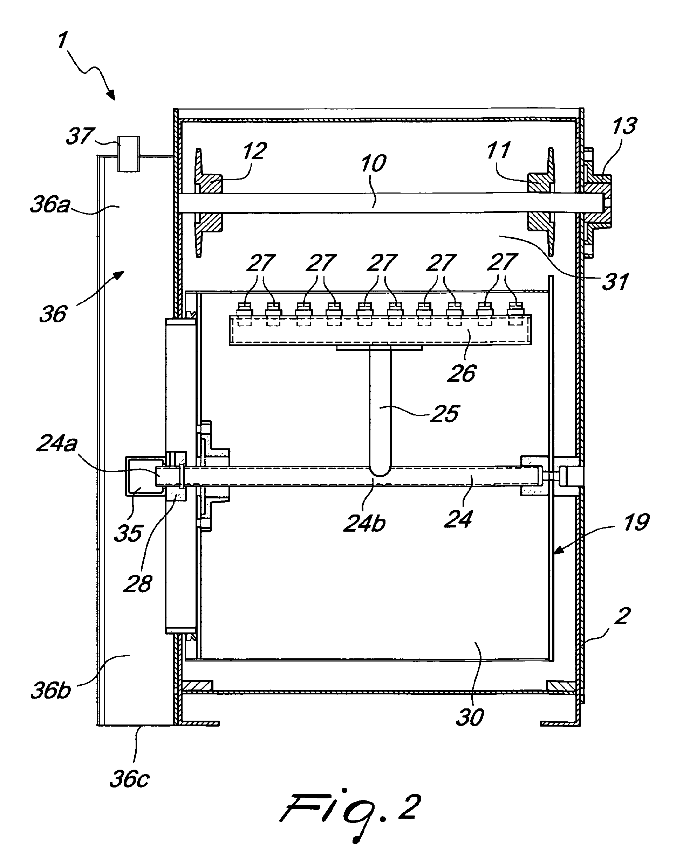

Figure 2 is a partial rear sectional view of an embodiment of a filtration machine according to the present invention;

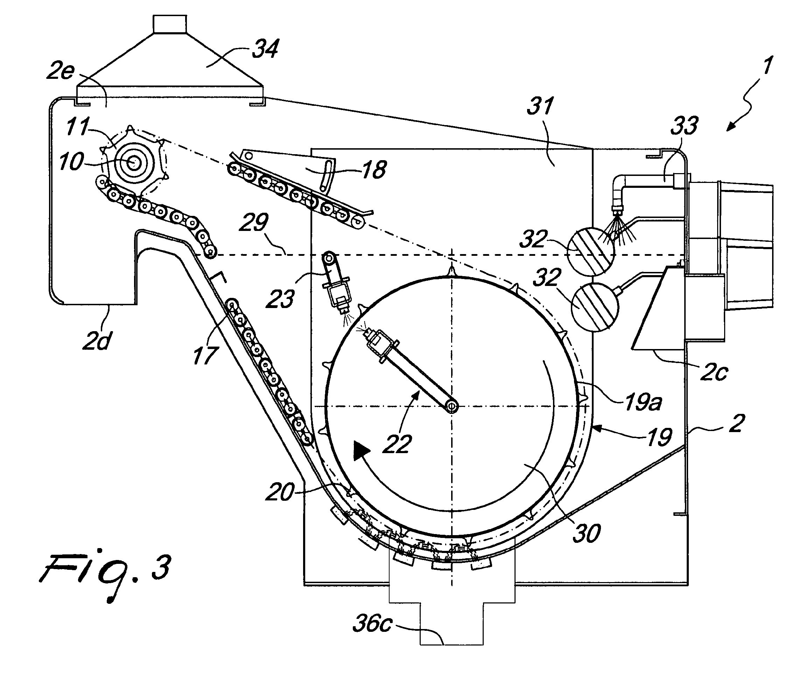

Figure 3 is a sectional view, taken along the line III-III, of an embodiment of a filtration machine shown in Figure 1;

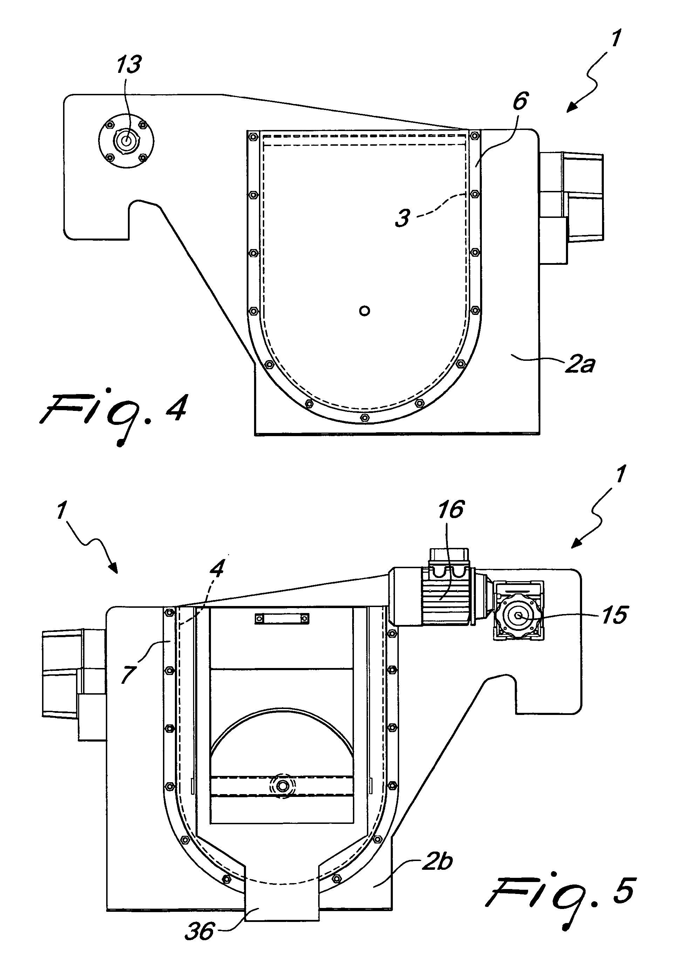

Figures 4 and 5 are two schematic side elevation views, respectively a right view and a left view, of an embodiment of a filtration machine according to the present invention.

### Ways of carrying out the invention

With reference to the figures, an embodiment of the self-cleaning filtration machine with rotary drum filter for filtering contaminated liquids according to the invention, generally designated by the reference numeral 1, comprises a mechanical structure 2 which is perfectly symmetrical and has advantageously two symmetrical openings 3 and 4, respectively on a right side wall 2a and on a left side wall 2b.

Two perfectly interchangeable covers 6 and 7 are bolted respectively on the right side wall 2a and on a left side wall 2b.

The two covers 6 and 7 are substantially rectangular and both have a rounded end portion 5.

Two other openings 8 and 9 which are perfectly symmetrical and have a substantially circular shape are provided respectively on the right side wall 2a and on the left side wall 2b.

A driving shaft 10 is inserted in the openings 8 and 9, and at least two sprockets 11 and 12 are keyed thereon and are arranged inside the filtration machine 1 and respectively proximate to the two side walls 2a and 2b.

The driving shaft 10 is supported axially and radially by bearings, which are associated with two supporting flanges 13 and 14, which are bolted respectively to the side walls 2a and 2b.

The driving shaft 10 passes through the flange 14 to be then associated with a reduction unit 15, connected to motor means 16.

Two chains 17 are respectively partly wound around the two sprockets 11 and 12.

The two chains 17 are pretensioned by at least one pretensioning unit 18 and partly wind around a rotary drum 19 which is substantially cylindrical and has one or two pluralities of teeth 20 on the outer surface 19a and arranged proximate to the side walls 2a and 2b.

The outer surface 19a has a plurality of holes, substantially along its entire extension.

The rotary drum 19 is arranged between the two symmetrical openings 3 and 4 and is arranged substantially axially to the rounded end portion 5, so that the rotation axis of the rotary drum 19 is parallel and does not coincide with the rotation axis of the sprockets 11 and 12.

The rotary drum 19 can rotate about its own axis of rotation by way of the motor means 16.

A filtration device associated with the rotary drum 19 is interposed between the two chains 17.

The filtration device comprises at least one filtration mesh 21, which wraps completely around the outer surface 19a of the rotary drum 19.

The filtration machine 1 comprises a device 22 for cleaning in countercurrent the filtration mesh 21 and a device 23 for cleaning along the filtration direction.

The countercurrent cleaning device 22 and the device 23 for cleaning along the filtration direction each comprise a main manifold 24, which is connected at its end 24a to a duct 35 which belongs to the washing system.

A secondary manifold 25 is connected in a central portion 24b of the main manifold 24, and is connected in turn to a nozzle holder 26, which bears a plurality of nozzles 27 which spray clean liquid toward the filtration mesh 21.

The components of the countercurrent cleaning device 22 and of the device 23 for cleaning along the filtration direction are installed strictly hermetically; more precisely, there are sealing rings, for example of the O-ring type, between the several components.

The main manifold 24 of the countercurrent cleaning device 22 acts as a rotation shaft for the rotary drum 19 and is associated, at one of its ends 24a, for example by means of a bayonet coupling with a positioning notch, with a supporting element 28 arranged on the cover 6.

The rotary drum 19 delimits internally a filtered liquid collection tank 30, which is separated from a contaminated liquid collection tank 31, which is arranged outside the rotary drum 19.

In the contaminated liquid collection tank 31 there is at least one level monitoring device 32 in order to detect a preset level 29 of the contaminated liquid.

The level monitoring device 32 is provided advantageously with a self-cleaning device 33.

In the contaminated liquid collection tank 31 there is advantageously a magnetic device, which is arranged conveniently proximate to the bottom of the tank 31 in order to attract magnetically the contaminants that have ferromagnetic properties.

The structure 2 comprises an inlet 2c, which is arranged laterally with respect to the rotary drum 19 and on which the contaminated liquid intake is installed.

The structure 2 comprises an opening 2d for discharging the contaminants into a collection tank arranged outside the filtration machine 1.

The structure 2 comprises advantageously a suction port 2e, which is arranged above the driving shaft 10 and on which air suction devices 34 are installed in order to aspirate any polluting emissions that originate from the processed fluid.

A chamber 36 which is external to the filtration machine 1 is installed on the cover 7, and an intake 37 is provided on the upper portion 36a of the chamber 36 in order to connect air suction means.

The air suction means can comprise for example at least one air extractor or one Venturi extractor or a system with a siphon and communicating vessels.

An outlet 36c for discharging the filtered liquid is provided on the lower portion 36b of the chamber 36.

With reference to the figures, operation of the self-cleaning filtration machine with rotary drum filter for filtering contaminated liquids according to the present invention is as follows.

In conditions of normal use, the contaminated liquid is introduced in the contaminated liquid collection tank 31 through the inlet 2c; due to a difference in pressure between the contaminated liquid collection tank 31 and the filtered liquid collection tank 30, the contaminated liquid is filtered by the filtration mesh 21, passing from the contaminated liquid collection tank 31 to the filtered liquid collection tank 30.

The partial vacuum in the filtered liquid collection tank 30 is generated by the air suction means, which by aspirating air generate the partial vacuum.

When the filtration mesh 21 becomes saturated with the contaminated substances, the level of the liquid in the contaminated liquid collection tank 31 rises until it reaches the preset level 29 of the contaminated liquid, so that it is detected by the level monitoring device 32.

The level detection device 32, once the preset level 29 of contaminated liquid has been detected, operates the motor means 16, which turn the rotary drum 19, while the countercurrent cleaning device 22 and the device for cleaning along the filtration direction 23 spray clean liquid in countercurrent with respect to the filtration mesh 21 respectively from the inside outwardly and from the outside inwardly.

The contaminants, also in combination with the action of the magnetic device 34 that attracts ferromagnetic contaminants, separate from the filtration mesh 21 to be deposited on the bottom of the tank 31 and then are conveyed outside toward the opening 2d to be deposited in a collection tank by means of scrapers 39 connected to the chains 17.

As already mentioned, the rotary drum is actuated when the level sensing device 32 detects the preset level, but can also rotate continuously or in a timer-controlled manner.

In practice it has been found that the self-cleaning filtration machine with rotary drum filter for filtering contaminated liquids according to the present invention fully achieves the intended aim and objects, since it does not use pumps to create the partial vacuum between the two tanks.

The filtration machine according to the invention provides from the outset the possibility to be assembled and modified, after its design, in order to adapt it to installation and system requirements.

The filtration machine according to the invention does not require particular installation equipment.

Another advantage achieved by the present filtration machine consists in that it is easy to maintain, since all its components can be extracted easily.

The self-cleaning filtration machine with rotary drum filter for contaminated liquids thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A self-cleaning filtration machine (1) for filtering contaminated liquids, comprising:
- a mechanical structure (2) which has an opening (4);
- a rotary drum filter (19) arranged inside said mechanical structure (2);
- at least one filtration device (21) which is associated with said rotary drum filter (19) and is interposed between a contaminated liquid collection tank (31) and a filtered liquid collection tank (30), said rotary drum filter (19) delimiting internally said filtered liquid collection tank (30). ,
**characterized in that** said opening (4) is covered by a cover (7) and **in that** said self-cleaning filtration machine further comprises an external chamber (36) which is externally installed on said cover (7), said external chamber (36) being in fluid communication with said filtered liquid collection tank (30), said external chamber (36) further comprising an intake (37) being provided on an upper portion (36a) of said external chamber (36) to which air suction means are connected that are provided in order to generate a partial vacuum between said contaminated liquid collection tank (31) and said filtered liquid collection tank (30), and an outlet (36c) for discharging the filtered liquid from said filtered liquid collection tank (30) being further provided on a lower portion (36b) of said external chamber (36).

2. The self-cleaning filtration machine according to claim 1, **characterized in that** said air suction means comprise at least one air extractor.

3. The self-cleaning filtration machine according to claim 1, **characterized in that** said air suction means comprise at least one Venturi extractor.

4. The self-cleaning filtration machine according to claim 1, **characterized in that** said air suction means comprise at least one system with a siphon and communicating vessels.

5. The self-cleaning filtration machine according to claim 1, **characterized in that** said filtration device (21) comprises at least one filtration mesh, which is wrapped totally on the outer surface of said rotary drum (19).

6. The self-cleaning filtration machine according to claim 5, **characterized in that** said filtered liquid collection tank (30) is internal to said rotary drum (19) and is delimited by the inner surface of said rotary drum (19).

7. The self-cleaning filtration machine according to one or more of the preceding claims, **characterized in that** it comprises at least one device (32) for monitoring the level of the liquid which is adapted to detect a preset level (29) of contaminated liquid In said contaminated liquid collection tank (31).

8. The self-cleaning filtration machine according to one or more of the preceding claims 5 to 7, **characterized in that** it comprises at least one device (22) for cleaning said filtration mesh (21) in countercurrent.

9. The self-cleaning filtration machine according to one or more of the preceding claims 5 to 8, **characterized in that** it comprises at least one device (23) for cleaning said filtration mesh (21) along the filtration direction.

10. The self-cleaning filtration machine according to claim 8, **characterized in that** said countercurrent cleaning device (22) is arranged in said filtered liquid collection tank (30) and is fixed with respect to said contaminated liquid collection tank (31).

11. The self-cleaning filtration machine according to claim 9, **characterized in that** said device (23) for cleaning along the filtration direction is arranged in said contaminated liquid collection tank (31) and comprises a plurality of nozzles (27) that spray clean liquid in the direction of said filtration mesh (21).

12. The self-cleaning filtration machine according to claims 10 and 11, **characterized in that** said countercurrent cleaning device (22) and said device (23) for cleaning along the filtration direction each comprise a plurality of nozzles (27) which spray clean liquid in the direction of said filtration mesh (21).

13. The self-cleaning filtration machine according to claims 6 to 12, **characterized in that** said rotary drum (19) can rotate about its own axis by way of transmission means connected to motor means (16).

14. The self-cleaning filtration machine according to claim 13, **characterized in that** said transmission means comprise at least one chain (17), which engages partly on a plurality of teeth (20) of said rotary drum (19) and partly on a pinion which is keyed on a shaft associated with said motor means (16).

15. The self-cleaning filtration machine according to claim 14, **characterized in that** it comprises scraper means (39) for said chain (17).

16. The self-cleaning filtration machine according to one or more of the preceding claims 5 to 15, **characterized in that** it comprises magnetic attraction means which are associated with said contaminated liquid collection tank (31) proximate to said filtration mesh (21).

17. The self-cleaning filtration machine according to one or more of the preceding claims, characterized that it comprises an opening (2d) for discharging the contaminants into a collection tank.

## Patentansprüche

1. Eine Selbstreinigungsfiltrationsmaschine (1) zum Filtrieren verunreinigter Flüssigkeiten, die Folgendes umfasst:
- eine mechanische Struktur (2), die eine Öffnung (4) hat;
- einen Drehtrommelfilter (19), angeordnet innerhalb der mechanischen Struktur (2);
- mindestens eine Filtrationsvorrichtung (21), die mit dem Drehtrommelfilter (19) verbunden und zwischen einem Sammeltank (31) für verunreinigte Flüssigkeit und einem Sammeltank (30) für filtrierte Flüssigkeit angeordnet ist, wobei der Drehtrommelfilter (19) den Sammeltank (30) für filtrierte Flüssigkeit innen begrenzt;
- **dadurch gekennzeichnet, dass** die Öffnung (4) mit einem Deckel (7) bedeckt ist, und dadurch, dass die Selbstreinigungsfiltrationsmaschine weiter eine externe Kammer (36) umfasst, die außen auf dem Deckel (7) installiert ist, wobei die externe Kammer (36) in Fluid-Austausch mit dem Sammeltank (30) für filtrierte Flüssigkeit steht und die externe Kammer (36) weiter einen Einlass (37) umfasst, der auf einem oberen Abschnitt (36a) der externen Kammer (36) angebracht ist, mit dem Luftsaugmittel verbunden sind, welche bereitgestellt sind, um einen Unterdruck zwischen dem Sammeltank (31) für verunreinigte Flüssigkeit und dem Sammeltank (30) für filtrierte Flüssigkeit zu erzeugen, und wobei weiter ein Auslass (36c) zum Ablassen der filtrierten Flüssigkeit aus dem Sammeltank (30) für filtrierte Flüssigkeit an einem unteren Abschnitt (36b) der externen Kammer (36) bereitgestellt ist.

2. Die Selbstreinigungsfiltrationsmaschine gemäß Anspruch 1, **dadurch gekennzeichnet, dass** die Luftsaugmittel mindestens ein Absauggebläse umfassen.

3. Die Selbstreinigungsfiltrationsmaschine gemäß Anspruch 1, **dadurch gekennzeichnet, dass** die Luftsaugmittel mindestens einen Venturi-Extraktor umfassen.

4. Die Selbstreinigungsfiltrationsmaschine gemäß Anspruch 1, **dadurch gekennzeichnet, dass** die Luftsaugmittel mindestens ein System mit einem Siphon und kommunizierenden Gefäßen umfassen.

5. Die Selbstreinigungsfiltrationsmaschine gemäß Anspruch 1, **dadurch gekennzeichnet, dass** die Filtrationsvorrichtung (21) mindestens ein Filtrationsgitter umfasst, das vollständig auf die äußere Oberfläche der Drehtrommel (19) gewickelt ist.

6. Die Selbstreinigungsfiltrationsmaschine gemäß Anspruch 5, **dadurch gekennzeichnet, dass** der Sammeltank (30) für filtrierte Flüssigkeit innerhalb der Drehtrommel (19) liegt und von der inneren Oberfläche der Drehtrommel (19) begrenzt wird.

7. Die Selbstreinigungsfiltrationsmaschine gemäß einem oder mehreren der obigen Ansprüche, **dadurch gekennzeichnet, dass** sie mindestens eine Vorrichtung (32) zur Überwachung des Flüssigkeitsstands umfasst, die ausgebildet ist, um einen voreingestellten Stand (29) verunreinigter Flüssigkeit in dem Sammeltank (31) für verunreinigte Flüssigkeit zu erkennen.

8. Die Selbstreinigungsfiltrationsmaschine gemäß einem oder mehreren der obigen Ansprüche 5 bis 7, **dadurch gekennzeichnet, dass** sie mindestens eine Vorrichtung (22) zur Reinigung des Filtrationsgitters (21) in Gegenströmung umfasst.

9. Die Selbstreinigungsfiltrationsmaschine gemäß einem oder mehreren der obigen Ansprüche 5 bis 8, **dadurch gekennzeichnet, dass** sie mindestens eine Vorrichtung (23) zur Reinigung des Filtrationsgitters (21) entlang der Filtrationsrichtung umfasst.

10. Die Selbstreinigungsfiltrationsmaschine gemäß Anspruch 8, **dadurch gekennzeichnet, dass** die Gegenstrom-Reinigungsvorrichtung (22) in dem Sammeltank (30) für filtrierte Flüssigkeit angebracht und im Verhältnis zu dem Sammeltank (31) für verunreinigte Flüssigkeit fixiert ist.

11. Die Selbstreinigungsfiltrationsmaschine gemäß Anspruch 9, **dadurch gekennzeichnet, dass** die Vorrichtung (23) zur Reinigung entlang der Filtrationsrichtung in dem Sammeltank (31) für verunreinigte Flüssigkeit angebracht ist und eine Vielzahl von Düsen (27) umfasst, die saubere Flüssigkeit in Richtung des Filtrationsgitters (21) sprühen.

12. Die Selbstreinigungsfiltrationsmaschine gemäß Anspruch 10 und 11, **dadurch gekennzeichnet, dass** die Gegenstrom-Reinigungsvorrichtung (22) und die Vorrichtung (23) zur Reinigung entlang der Filtrationsrichtung jeweils eine Vielzahl von Düsen (27) umfassen, die saubere Flüssigkeit in Richtung des Filtrationsgitters (21) sprühen.

13. Die Selbstreinigungsfiltrationsmaschine gemäß Anspruch 6 bis 12, **dadurch gekennzeichnet, dass** die Drehtrommel (19) sich mit Hilfe von Übertragungsmitteln, die mit Motormitteln (16) verbunden sind, um ihre eigene Achse drehen kann.

14. Die Selbstreinigungsfiltrationsmaschine gemäß Anspruch 13, **dadurch gekennzeichnet, dass** die Übertragungsmittel mindestens eine Kette (17) umfassen, die teilweise in eine Vielzahl von Zähnen (20) der Drehtrommel (19) und teilweise in ein Ritzel eingreift, das mit einer Welle verkeilt ist, welche mit den Motormitteln (16) verbunden ist.

15. Die Selbstreinigungsfiltrationsmaschine gemäß Anspruch 14, **dadurch gekennzeichnet, dass** sie Abstreifermittel (39) für die Kette (17) umfasst.

16. Die Selbstreinigungsfiltrationsmaschine gemäß einem oder mehreren der obigen Ansprüche 5 bis 15, **dadurch gekennzeichnet, dass** sie magnetische Anziehungsmittel umfasst, die nahe dem Filtrationsgitter (21) mit dem Sammeltank (31) für verunreinigte Flüssigkeit verbunden sind.

17. Die Selbstreinigungsfiltrationsmaschine gemäß einem oder mehreren der obigen Ansprüche, **dadurch gekennzeichnet, dass** sie eine Öffnung (2d) zum Ablassen der verunreinigenden Stoffe in einen Sammeltank umfasst.

## Revendications

1. Equipement de filtration autonettoyant (1) pour filtrer des liquides contaminés, comprenant :
- une structure mécanique (2) qui a une ouverture (4) ;
- un filtre à tambour rotatif (19) agencé à l'intérieur de ladite structure mécanique (2) ;
- au moins un dispositif de filtration (21) qui est associé audit filtre à tambour rotatif (19) et est intercalé entre un réservoir de collecte de liquide contaminé (31) et un réservoir de liquide filtré (30), ledit filtre à tambour rotatif (19) délimitant intérieurement ledit réservoir de collecte de liquide filtré (30) ;
**caractérisé en ce que** ladite ouverture (4) est couverte par un couvercle (7) et **en ce que** ledit équipement de filtration autonettoyant comprend en outre une chambre externe (36) qui est extérieurement installée sur ledit couvercle (7), ladite chambre externe (36) étant en communication de fluide avec ledit réservoir de collecte de liquide filtré (30), ladite chambre externe (36) comprenant en outre une admission (37) qui est prévue sur une partie supérieure (36a) de ladite chambre externe (36) à laquelle sont raccordés lesdits moyens d'aspiration d'air qui sont prévus afin de générer un vide partiel entre ledit réservoir de collecte de liquide contaminé (31) et ledit réservoir de collecte de liquide filtré (30), et une sortie (36c) pour décharger le liquide filtré dudit réservoir de collecte de liquide filtré (30) qui est en outre prévu sur une partie inférieure (36b) de ladite chambre externe (36).

2. Equipement de filtration autonettoyant selon la revendication 1, **caractérisé en ce que** lesdits moyens d'aspiration d'air comprennent au moins un extracteur d'air.

3. Equipement de filtration autonettoyant selon la revendication 1, **caractérisé en ce que** lesdits moyens d'aspiration d'air comprennent au moins un extracteur de Venturi.

4. Equipement de filtration autonettoyant selon la revendication 1, **caractérisé en ce que** lesdits moyens d'aspiration d'air comprennent au moins un système avec un siphon et des vases communicants.

5. Equipement de filtration autonettoyant selon la revendication 1, **caractérisé en ce que** ledit dispositif de filtration (21) comprend au moins une maille de filtration qui est enroulée totalement sur la surface externe dudit tambour rotatif (19).

6. Equipement de filtration autonettoyant selon la revendication 5, **caractérisé en ce que** ledit réservoir de collecte de liquide filtré (30) est à l'intérieur dudit tambour rotatif (19) et est délimité par la surface interne dudit tambour rotatif (19).

7. Equipement de filtration autonettoyant selon une ou plusieurs des revendications précédentes, **caractérisé en ce qu'**il comprend au moins un dispositif (32) pour surveiller le niveau de liquide qui est adapté pour détecter un niveau prédéterminé (29) du liquide contaminé dans ledit réservoir de collecte de liquide contaminé (31).

8. Equipement de filtration autonettoyant selon une ou plusieurs des revendications 5 à 7, **caractérisé en ce qu'**il comprend au moins un dispositif (22) pour nettoyer ladite maille de filtration (21) à contre-courant.

9. Equipement de filtration autonettoyant selon une ou plusieurs des revendications 5 à 8, **caractérisé en ce qu'**il comprend au moins un dispositif (23) pour nettoyer ladite maille de filtration (21) le long de la direction de filtration.

10. Equipement de filtration autonettoyant selon la revendication 8, **caractérisé en ce que** ledit dispositif de nettoyage à contre-courant (22) est agencé dans ledit réservoir de collecte de liquide filtré (30) et est fixé par rapport audit réservoir de collecte de liquide contaminé (31).

11. Equipement de filtration autonettoyant selon la revendication 9, **caractérisé en ce que** ledit dispositif (23) prévu pour nettoyer le long de la direction de filtration est agencé dans ledit réservoir de collecte de liquide contaminé (31) et comprend une pluralité de buses (27) qui pulvérisent du liquide propre dans la direction de ladite maille de filtration (21).

12. Equipement de filtration autonettoyant selon les revendications 10 et 11, **caractérisé en ce que** ledit dispositif de nettoyage à contre-courant (22) et ledit dispositif (23) pour nettoyer le long de la direction de filtration comprennent chacun une pluralité de buses (27) qui pulvérisent du liquide propre dans la direction de ladite maille de filtration (21).

13. Equipement de filtration autonettoyant selon les revendications 6 à 12, **caractérisé en ce que** ledit tambour rotatif (19) peut tourner autour de son axe au moyen des moyens de transmission raccordés aux moyens de moteur (16).

14. Equipement de filtration autonettoyant selon la revendication 13, **caractérisé en ce que** lesdits moyens de transmission comprennent au moins une chaîne (17) qui se met partiellement en prise sur une pluralité de dents (20) dudit tambour rotatif (19) et partiellement sur un pignon qui est claveté sur un arbre associé auxdits moyens de moteur (16).

15. Equipement de filtration autonettoyant selon la revendication 14, **caractérisé en ce qu'**il comprend des moyens de grattoir (39) pour ladite chaîne (17).

16. Equipement de filtration autonettoyant selon une ou plusieurs des revendications 5 à 15, **caractérisé en ce qu'**il comprend des moyens d'attraction magnétique qui sont associés audit réservoir de collecte de liquide contaminé (31) à proximité de ladite maille de filtration (21).

17. Equipement de filtration autonettoyant selon une ou plusieurs des revendications précédentes, **caractérisé en ce qu'**il comprend une ouverture (2d) pour décharger les contaminants dans un réservoir de collecte.
